# EUROPEAN PATENT APPLICATION

(11) **EP 4 576 688 A1**
(43) Date of publication of application: **25.06.2025**
(21) Application number: 22955238.5
(22) Date of filing: 15.08.2022
(51) Int. Cl.: H04L 27/00, H04W 28/00

(54) **ARTIFICIAL INTELLIGENCE (AI)-BASED SERVICE PROVIDING METHOD AND APPARATUS, DEVICE, AND STORAGE MEDIUM**

(71) Applicant: Beijing Xiaomi Mobile Software Co., Ltd., Beijing 100085 (CN)
(72) Inventor: CHEN, Dong, Beijing 100085 (CN); SUN, Yuze, Beijing 100085 (CN)
(74) Representative: Gunzelmann, Rainer
(86) International application number: PCT/CN2022/112605
(87) International publication number: WO 2024/036456

(57) **Abstract**

The present invention provides an AI-based service providing method and apparatus, a device. and a storage medium. The method comprises: receiving a first request message sent by an AMF network element, the first request message indicating an AI service requested by a terminal device; determining a data allocation result on the basis of the first request message, the data allocation result comprising: indication information corresponding to data, which is allocated to a first AI network function (NF) network element and at least one second AI NF network element which participates in execution of the AI service, in data required for completing the AI service; sending the data allocation result to the NF network element, and receiving data allocated by the NF network element on the basis of the data allocation result, and determining a first data execution result on the basis of the data allocated by the NF network element, and receiving a second data execution result sent by the second AI NF network element. According to the method in the present invention, the requirements of personalized AI services are met, AI service results provided are more accurate, the execution efficiency is high, the overall effectiveness and speed of AI services are increased, and the problem of fragmentation of AI application scenarios is avoided.

## Description

### TECHNICAL FIELD

The disclosure relates to a field of communication technology, and specifically to a method and an apparatus for providing a service based on artificial intelligence (AI), a device, and a storage medium.

### BACKGROUND

Since artificial intelligence (AI) technology may help network realize a higher level of autonomy, reduce costs and increase benefits, the AI technology is often used in the network to provide AI services.

In the related art, AI services are mainly provided based on the AI technology via optimization and transformation on a traditional network architecture.

However, methods in the related art are to provide AI services via the optimization and transformation on the traditional network architecture, which lacks a unified technical framework for providing AI services, and leads to fragmentation of network AI application scenarios. Furthermore, a process of providing AI services is just a simple superposition on existing network processes, and there is a lack of a universal AI service providing process, which may not meet needs of personalized AI services. Moreover, methods for providing AI services in the related art do not subdivide the types of data needed to complete the AI service and do not categorize and manage the AI algorithms needed to complete the AI service, which results in low efficiency and poor convenience.

### SUMMARY

The disclosure provides a method and an apparatus for providing a service based on artificial intelligence (AI), a device, and a storage medium, so as to solve technical problems in the related art that AI application scenarios are fragmented, needs of personalized AI services may not be met, efficiency is low and convenience is poor.

According to a first aspect of the embodiments of the disclosure, a method for providing a service based on AI is provided. The method is executed by a first AI network function (NF) network element with decision-making capability, including: receiving a first request message sent by an access and mobility management function (AMF) network element, in which the first request message indicates that there is an AI service requested by a terminal; determining a data allocation result based on the first request message, in which the data allocation result includes: indication information corresponding to data allocated to the first AI NF network element and at least one second AI NF network element involved in executing the AI service from data needed to complete the AI service; sending the data allocation result to an NF network element and receiving data allocated by the NF network element based on the data allocation result; and determining a first data execution result based on the data allocated by the NF network element and receiving a second data execution result sent by the second AI NF network element.

The disclosure provides a method for providing a service based on AI. The first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, the method further includes: determining, based on the first data execution result and the second data execution result, a final service execution result corresponding to the AI service; and sending the final service execution result corresponding to the AI service to the AMF network element.

Optionally, the first request message includes at least one of: an AI service type corresponding to the AI service requested by the terminal; or an AI service identifier (ID) corresponding to the AI service requested by the terminal.

Optionally, the method further includes: determining, from a plurality of second AI NF network elements communicatively connected to the first AI NF network element, the at least one second AI NF network element involved in executing the AI service.

Optionally, determining the at least one second AI NF network element involved in executing the AI service includes: determining an AI service type corresponding to the AI service; determining an AI algorithm needed to complete the AI service; determining a data type of data needed to complete the AI service; sending a status request message to the second AI NF network elements communicatively connected to the first AI NF network element, in which the status request message is configured to request status information of the second AI NF network elements related to a capability of executing the AI service; receiving the status information sent by the second AI NF network elements; and selecting, based on at least one of the AI service type, the AI algorithm, the data type, or the status information, the at least one second AI NF network element involved in executing the AI service.

Optionally, the status information includes at least one of: energy status information; or communication status information.

Optionally, the indication information includes at least one of: a data name; or a data ID.

Optionally, determining the data allocation result based on the first request message includes: determining pieces of indication information corresponding to the data needed to complete the AI service based on the first request message, in which each piece of indication information indicates a type of data; obtaining at least one indication information group by grouping the pieces of indication information; and obtaining the data allocation result by allocating an indication information group to the first AI NF network element and an indication information group to the at least one second AI NF network element involved in executing the AI service respectively, in which the indication information group allocated to the first AI NF network element or the indication information group allocated to the at least one second AI NF network element involved in executing the AI service indicates: allocating a data group indicated by the indication information group corresponding to the first AI NF network element or the indication information group corresponding to the at least one second AI NF network element involved in executing the AI service, to the first AI NF network element or the at least one second AI NF network element involved in executing the AI service.

Optionally, obtaining the at least one indication information group by grouping the pieces of indication information includes: grouping the pieces of indication information of data based on an importance degree of the data for the AI service and/or a processing difficulty of the data.

Optionally, allocating the indication information group to the first AI NF network element and the indication information group to the at least one second AI NF network element involved in executing the AI service respectively includes: allocating a specific indication information group to the first AI NF network element and allocating other indication information groups to the at least one second AI NF network element involved in executing the AI service respectively, in which data corresponding to the specific indication information group has a maximum importance degree for the AI service, and/or the data corresponding to the specific indication information group has a maximum processing difficulty.

Optionally, the method further includes: allocating resource blocks with different weights to the at least one second AI NF network element involved in executing the AI service, in which the weight of the resource block allocated to the second AI NF network element is positively correlated with the importance degree and the processing difficulty of the data corresponding to the indication information group allocated to the second AI NF network element for the AI service.

Optionally, the NF network element includes at least one of: a user data repository (UDR) network element; or an unstructured data storage network function (UDSF) network element.

Optionally, determining, based on the first data execution result and the second data execution result, the final service execution result corresponding to the AI service includes: obtaining the final service execution result corresponding to the AI service by performing an aggregation processing and a structuring processing on the first data execution result and the second data execution result.

Optionally, the data execution result is determined by the first AI NF network element in parallel with the at least one second AI NF network element involved in executing the AI service.

According to a second aspect of the embodiments of the disclosure, a method for providing a service based on AI is provided, executed by a second AI NF network element with execution capability, including: receiving data allocated by an NF network element, in which the data is data needed to complete an AI service; determining a second data execution result based on the data allocated by the NF network element; and sending the second data execution result to a first AI NF network element.

Optionally, the NF network element includes at least one of: a UDR network element; or a UDSF network element.

Optionally, the method further includes: receiving a status request message sent by the first AI NF network element, in which the status request message is configured to request status information of the second AI NF network element related to a capability of executing the AI service; and sending the status information to the first AI NF network element.

Optionally, the status information includes at least one of: energy status information; or communication status information.

Optionally, the method further includes: receiving a resource block allocated by the first AI NF network element.

Optionally, the data execution result is determined by the second AI NF network element in parallel with other second AI NF network elements and the first AI NF network element.

According to a third aspect of the embodiments of the disclosure, a method for providing a service based on AI is provided, executed by an NF network element, including: receiving a data allocation result sent by a first AI NF network element, in which the data allocation result includes: indication information corresponding to data allocated to the first AI NF network element and at least one second AI NF network element involved in executing the AI service from data needed to complete the AI service; and allocating data corresponding to the first AI NF network element and data corresponding to the at least one second AI NF network element involved in executing the AI service based on the data allocation result.

Optionally, the indication information includes at least one of: a data name; or a data ID.

According to a fourth aspect of the embodiments of the disclosure, a method for providing a service based on AI is provided, executed by an AMF network element, including: receiving a second request message sent by a terminal, in which the second request message indicates that there is an AI service requested by the terminal; sending a first request message to a first AI NF network element, in which the first request message indicates that there is the AI service requested by the terminal; receiving a final service execution result corresponding to the AI service sent by the first AI NF network element; and sending the final service execution result corresponding to the AI service to the terminal.

Optionally, both the first request message and the second request message include at least one of: an AI service type corresponding to the AI service requested by the terminal; or an AI service ID corresponding to the AI service requested by the terminal.

Optionally, the method further includes: receiving a response message sent by the terminal, in which the response message indicates whether the terminal has successfully received the final service execution result corresponding to the AI service.

Optionally, the method further includes: receiving a feedback result sent by the terminal, in which the feedback result is configured to feed back a satisfaction degree with the final service execution result.

According to a fifth aspect of the embodiments of the disclosure, a method for providing a service based on AI is provided, executed by a terminal, including: sending a second request message to an AMF network element, in which the second request message indicates that there is an AI service requested by the terminal; and receiving a final service execution result corresponding to the AI service sent by the AMF network element.

Optionally, the second request message includes at least one of: an AI service type corresponding to the AI service requested by the terminal; or an AI service ID corresponding to the AI service requested by the terminal.

Optionally, the method further includes: sending a response message to the AMF network element, in which the response message indicates whether the terminal has successfully received the final service execution result corresponding to the AI service

Optionally, the method further includes: sending a feedback result to the AMF network element, in which the feedback result is configured to feed back a satisfaction degree with the final service execution result.

According to a sixth aspect of the embodiments of the disclosure, a communication apparatus configured in a first AI NF network element is provided, including: a transceiver module, configured to receive a first request message sent by an AMF network element, in which the first request message indicates that there is an AI service requested by a terminal; and a processing module, configured to determine a data allocation result based on the first request message, in which the data allocation result includes: indication information corresponding to data allocated to the first AI NF network element and at least one second AI NF network element involved in executing the AI service from data needed to complete the AI service.

The transceiver module is further configured to send the data allocation result to an NF network element and receive data allocated by the NF network element based on the data allocation result.

The processing module is further configured to determine a first data execution result based on the data allocated by the NF network element and receive a second data execution result sent by the second AI NF network element.

According to a seventh aspect of the embodiments of the disclosure, a communication apparatus configured in a second AI NF network element is provided, including: a transceiver module, configured to receive data allocated by an NF network element, in which the data is data needed to complete an AI service; and a processing module, configured to determine a second data execution result based on the data allocated by the NF network element.

The transceiver module is further configured to send the second data execution result to a first AI NF network element.

According to an eighth aspect of the embodiments of the disclosure, a communication apparatus configured in an NF network element is provided, including: a transceiver module, configured to receive a data allocation result sent by a first AI NF network element, in which the data allocation result includes: indication information corresponding to data allocated to the first AI NF network element and at least one second AI NF network element involved in executing the AI service from data needed to complete the AI service.

The transceiver module is further configured to allocate data corresponding to the first AI NF network element and data corresponding to the at least one second AI NF network element involved in executing the AI service based on the data allocation result.

According to a ninth aspect of the embodiments of the disclosure, a communication apparatus configured in an AMF network element is provided, including: a transceiver module, configured to receive a second request message sent by a terminal, in which the second request message indicates that there is an AI service requested by the terminal.

The transceiver module is further configured to send a first request message to a first AI NF network element, in which the first request message indicates that there is the AI service requested by the terminal.

The transceiver module is further configured to receive a final service execution result corresponding to the AI service sent by the first AI NF network element.

The transceiver module is further configured to send the final service execution result corresponding to the AI service to the terminal.

According to a tenth aspect of the embodiments of the disclosure, a communication apparatus configured in a terminal is provided, including: a transceiver module, configured to send a second request message to an AMF network element, in which the second request message indicates that there is an AI service requested by the terminal.

The transceiver module is configured to receive a final service execution result corresponding to the AI service sent by the AMF network element.

According to an eleventh aspect of the embodiments of the disclosure, a communication device including a processor is provided. When a computer program in a memory is called by the processor, the method in the above first aspect is implemented.

According to a twelfth aspect of the embodiments of the disclosure, a communication device including a processor is provided. When a computer program in a memory is called by the processor, the method in the above second aspect is implemented.

According to a thirteen aspect of the embodiments of the disclosure, a communication device including a processor is provided. When a computer program in a memory is called by the processor, the method in the above third aspect is implemented.

According to a fourteenth aspect of the embodiments of the disclosure, a communication apparatus including a processor is provided. When a computer program in a memory is called by the processor, the method in the above fourth aspect is implemented.

According to a fifteenth aspect of the embodiments of the disclosure, a communication apparatus including a processor is provided. When a computer program in a memory is called by the processor, the method in the above fifth aspect is implemented.

According to a sixteenth aspect of the embodiments of the disclosure, a communication device is provided, including a processor and a memory for storing a computer program. When the computer program stored in the memory is executed by the processor, the communication device is caused to implement the method in the above first aspect.

According to a seventeenth aspect of the embodiments of the disclosure, a communication device is provided, including a processor and a memory for storing a computer program. When the computer program stored in the memory is executed by the processor, the communication device is caused to implement the method in the above second aspect.

According to an eighteenth aspect of the embodiments of the disclosure, a communication device is provided, including a processor and a memory for storing a computer program. When the computer program stored in the memory is executed by the processor, the communication device is caused to implement the method in the above third aspect.

According to a nineteenth aspect of the embodiments of the disclosure, a communication device is provided, including a processor and a memory for storing a computer program. When the computer program stored in the memory is executed by the processor, the communication device is caused to implement the method in the above fourth aspect.

According to a twentieth aspect of the embodiments of the disclosure, a communication device is provided, including a processor and a memory for storing a computer program. When the computer program stored in the memory is executed by the processor, the communication device is caused to implement the method in the above fifth aspect.

According to a twenty-first aspect of the embodiments of the disclosure, a communication device including a processor and an interface circuit is provided, in which the interface circuit is configured to receive code instructions and transmit the code instructions to the processor; and the processor is configured to run the code instructions to cause the device to implement the method in the above first aspect.

According to a twenty-second aspect of the embodiments of the disclosure, a communication device including a processor and an interface circuit is provided, in which the interface circuit is configured to receive code instructions and transmit the code instructions to the processor; and the processor is configured to run the code instructions to cause the device to implement the method in the above second aspect.

According to a twenty-third aspect of the embodiments of the disclosure, a communication device including a processor and an interface circuit is provided, in which the interface circuit is configured to receive code instructions and transmit the code instructions to the processor; and the processor is configured to run the code instructions to cause the device to implement the method in the above third aspect.

According to a twenty-fourth aspect of the embodiments of the disclosure, a communication device including a processor and an interface circuit is provided, in which the interface circuit is configured to receive code instructions and transmit the code instructions to the processor; and the processor is configured to run the code instructions to cause the device to implement the method in the above fourth aspect.

According to a twenty-fifth aspect of the embodiments of the disclosure, a communication device including a processor and an interface circuit is provided, in which the interface circuit is configured to receive code instructions and transmit the code instructions to the processor; and the processor is configured to run the code instructions to cause the device to implement the method in the above fifth aspect.

According to a twenty-sixth aspect of the embodiments of the disclosure, a communication system is provided. The system includes the communication device in the sixth aspect to the communication device in the tenth aspect, or the communication device in the eleventh aspect to the communication device in the fifteenth aspect, or the communication device in the sixteenth aspect to the communication device in the twentieth aspect, or the communication device in the twenty-first aspect to the communication device in the twenty-fifth aspect.

According to a twenty-seven aspect of the embodiments of the disclosure, a computer readable storage medium is provided, for storing instructions used by the above network device and/or by the above terminal. When the instructions are executed, the network device is caused to implement the method in the above first aspect, and/or the terminal is caused to implement the method in the above second aspect, and/or, the terminal is caused to implement the method in the above third aspect, and/or the terminal is caused to implement the method in the above fourth aspect, and/or the terminal is caused to implement the method in the above fifth aspect.

According to a twenty-eighth aspect of the embodiments of the disclosure, a computer program product including a computer program is provided. When the computer program product is running on a computer, the computer is caused to implement the method of any one of the above first aspect to the above fifth aspect.

According to a twenty-fourth aspect of the embodiments of the disclosure, a chip system is provided. The chip system includes at least one processor and interface, configured to support a network device to perform the functions in the method in the first aspect, and/or, configured to support a terminal to perform the functions in the method in the second aspect, and/or, configured to support a terminal to perform the functions in the method in the third aspect, and/or, configured to support a terminal to perform the functions in the method in the fourth aspect, and/or, configured to support a terminal to perform the functions in the method in the fifth aspect, for example, to determine or process at least one of data and information in the above methods. In one possible design, the chip system also includes a memory for saving computer programs and data necessary for a source secondary node. The chip system may include a chip, or a chip and other discrete devices.

According to a thirtieth aspect of the embodiments of the disclosure, a computer program is provided. When the computer program is running on a computer, the computer is caused to implement the method in any one of the above first aspect to the above fourth aspect.

According to a thirty-first aspect of the embodiments of the disclosure, a communication system is provided. The communication system includes: a first network element, configured to receive a second request message sent by a terminal, in which the second request message indicates that there is an AI service requested by the terminal; and send a first request message, in which the first request message indicates that there is the AI service requested by the terminal; a second network element, configured to receive the first request message and determine a data allocation result based on the first request message, in which the data allocation result includes: indication information corresponding to data allocated to the first AI NF network element and at least one second AI NF network element involved in executing the AI service from data needed to complete the AI service, and send the data allocation result; a third network element, configured to receive the data allocation result and allocate data based on the data allocation result; in which the second network element is further configured to receive the data allocated by the third network element based on the data allocation result and determine a first data execution result; and at least one fourth network element, configured to receive the data allocated by the third network element based on the data allocation result, determine a second data execution result, and send the second data execution result.

The second network element is further configured to receive each second data execution result, determine, based on the first data execution result and the second data execution result, a final service execution result corresponding to the AI service, and send the final service execution result corresponding to the AI service.

The first network element is further configured to receive the final service execution result corresponding to the AI service, and send the final service execution result corresponding to the AI service to the terminal.

### BRIEF DESCRIPTION OF THE DRAWINGS

The above and/or other aspects and advantages of embodiments of the disclosure will become apparent and more readily appreciated from the following descriptions made with reference to the accompanying drawings.
FIG. 1a is a schematic diagram of an architecture of a communication system according to embodiments of the disclosure.
FIG. 1b is a schematic diagram of an architecture of a core network according to embodiments of the disclosure.
FIG. 2 is a flowchart of a method for providing a service based on artificial intelligence (AI) according to another embodiment of the disclosure.
FIG. 3 is a flowchart of a method for providing a service based on AI according to another embodiment of the disclosure.
FIG. 4 is a flowchart of a method for providing a service based on AI according to another embodiment of the disclosure.
FIG. 5 is a flowchart of a method for providing a service based on AI according to another embodiment of the disclosure.
FIG. 6 is a flowchart of a method for providing a service based on AI according to another embodiment of the disclosure.
FIG. 7 is a flowchart of a method for providing a service based on AI according to another embodiment of the disclosure.
FIG. 8 is a flowchart of a method for providing a service based on AI according to another embodiment of the disclosure.
FIG. 9 is a flowchart of a method for providing a service based on AI according to another embodiment of the disclosure.
FIG. 10 is a flowchart of a method for providing a service based on AI according to another embodiment of the disclosure.
FIG. 11 is a flowchart of a method for providing a service based on AI according to another embodiment of the disclosure.
FIG. 12 is a flowchart of a method for providing a service based on AI according to another embodiment of the disclosure.
FIG. 13 is a flowchart of a method for providing a service based on AI according to another embodiment of the disclosure.
FIG. 14 is a flowchart of a method for providing a service based on AI according to another embodiment of the disclosure.
FIG. 15 is a flowchart of a method for providing a service based on AI according to another embodiment of the disclosure.
FIG. 16 is a flowchart of a method for providing a service based on AI according to another embodiment of the disclosure.
FIG. 17a is a schematic diagram of an interaction process of a method for providing a service based on AI according to another embodiment of the disclosure.
FIG. 17b is a block diagram of a communication apparatus according to an embodiment of the disclosure.
FIG. 18 is a block diagram of a communication apparatus according to another embodiment of the disclosure.
FIG. 19 is a block diagram of a communication apparatus according to another embodiment of the disclosure.
FIG. 20 is a block diagram of a communication apparatus according to another embodiment of the disclosure.
FIG. 21 is a block diagram of a communication apparatus according to another embodiment of the disclosure.
FIG. 22 is a block diagram of a communication system according to an embodiment of the disclosure.
FIG. 23 is a block diagram of a communication device according to an embodiment of the disclosure.
FIG. 24 is a block diagram of a chip according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to embodiments of the disclosure as recited in the appended claims.

The terms used in the embodiments of the disclosure are solely for the purpose of describing a particular embodiment and are not intended to limit the embodiments of the disclosure. The terms "a/an" and "the" in the singular form used in the embodiments and claims of the disclosure are also intended to include the plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the disclosure, such information should not be limited to these terms. These terms are used only to distinguish information in the same type from one another. For example, without departing from the scope of embodiments of the disclosure, the first information may also be referred to as the second information, and similarly, the second information may be referred to as the first information. Depending on the context, words "if" and "in case that" used here may be interpreted as "when", "while", or "in response to determining...".

The embodiments of the disclosure are described in detail below. Examples of the embodiments are shown in the accompanying drawings, in which the same or similar labels throughout the present embodiment represent the same or similar elements or elements having the same or similar functions. The embodiments below with reference to the accompanying drawings are exemplary and are intended to explain the disclosure, but should not be construed as a limitation to the disclosure.

For convenience of understanding, terms in the disclosure will be first introduced.

### 1. Artificial Intelligence (AI)

AI is a new technical science that researches and develops theories, methods, technologies and application systems for simulating, extending and expanding human intelligence.

### 2. Access and Mobility Management Function (AMF) Network Element

The AMF network element performs registration, connectivity, reachability, and mobility management. It provides a session management message transmission channel for a terminal and a session management function (SMF) network element, and provides authentication and authorization functions for the terminal when assessing to the network. Furthermore, it is an access point between a terminal and a control plane of a wireless core network.

For convenience of understanding the method for determining a duration of a sidelink in the embodiments of the disclosure, a communication system to which the embodiments of the disclosure applies is first described below.

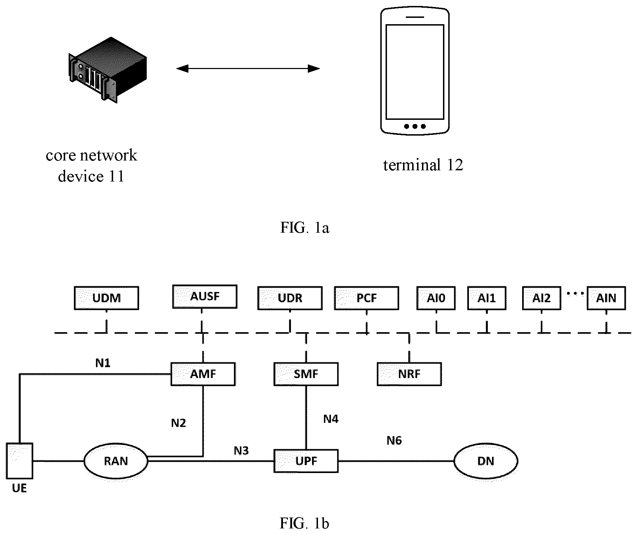

Please refer to FIG. 1a, which is a schematic diagram of an architecture of a communication system according to embodiments of the disclosure. The communication system may include but is not limited to one core network device and one terminal. The number and form of devices shown in FIG. 1a are as an example and do not constitute a limitation on the embodiments of the disclosure, and may include two or more core network devices and two or more terminals in practical applications. The communication system shown in FIG. 1a includes one core network device 11 and one terminal 12 as an example.

It should be noted that the technical solution of the embodiments of the disclosure may be applied to various communication systems, such as, a long term evolution (LTE) system, a 5th generation (5G) mobile communication system, a 5G new radio (NR) system, or other new mobile communication systems in the future.

The core network device 11 in the embodiments of the disclosure is a device deployed in the core network. The function of the core network device 11 is mainly to provide user connection and management of users, complete service bearing, and provide an interface to an external network as a bearer network. For example, core network devices in a 5G NR system may include an AMF network element, a user plane function (UPF) network element, and an SMF network element.

For example, the core network device 11 in the embodiments of the disclosure may include a location management function (LMF) network element. Optionally, the LMF network element includes a location server, which may be implemented as any one of: an LMF, an enhanced serving mobile location centre (E-SMLC), a secure user plane location (SUPL), and an SUPL location platform (SUPL SLP).

The terminal 12 in the embodiments of the disclosure is an entity on a user side used for receiving or transmitting a signal, such as a mobile phone. The terminal may also be called a terminal device, a user equipment (UE), a mobile station (MS), a mobile terminal (MT), etc. The terminal may be a car with a communication function, a smart car, a mobile phone, a wearable device, a Pad, a computer with a wireless sending and receiving function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in a transportation safety, a wireless terminal in a smart city, a wireless terminal in a smart home and so on. The specific technology and device form adopted by the terminal are not limited in the embodiments of the disclosure.

The core network device 11 and the terminal 12 may communicate via a base station.

Please refer to FIG. 1b, which is a schematic diagram of an architecture of a core network according to embodiments of the disclosure. FIG. 1b includes network elements included in a core network architecture and interfaces used for communication between network elements.

The core network architecture is to abstract the functions of the network elements into a plurality of services. Compared with the traditional core network architecture, N network elements including AI0, AI1, AI2... AIN are added to the core network architecture in FIG. 1b. The AIO is a decision-making network element used to allocate AI tasks to the AI1, AI2...AIN, and may also provide ana AI function; and the AI1, AI2...AIN are network elements that provide AI functions based on the decision made by the AI0. The AIO may be a first AI NF network element with the decision-making capability mentioned in the following embodiments, the AI1, AI2 ... AIN may be second AI NF network elements with the capability of executing tasks mentioned in the following embodiments. The AI0, AI1, AI2 ...AIN may communicate with another network element in a network, such as an AMF network element and an SMF network element.

It may be understood that the communication system in the embodiments of the disclosure is intended to illustrate the technical solution in the embodiments of the disclosure more clearly, and does not constitute a limitation of the technical solution in the embodiments of the disclosure. Those skilled in the art may know that the technical solution in the embodiments of the disclosure is equally applicable to similar technical problems, with the evolution of a system architecture and the emergence of a new service scene.

In addition, it needs to be noted that the method of the disclosure is specifically implemented on the basis of the following operations that has been completed.
(1) the terminal has completed an initial registration process and has been connected to a network.
(2) AI NF network elements (i.e., AI0, AI1, and AI2...AIN in FIG. 1b) have been registered at a network repository function (NRF) and may be accessed to the core network architecture normally.
(3) the core network has authorized each AI NF to ensure the secure access of the AI NF.
(4) the AIO and AI1/.../AIN trust each other and transmit real communication information.

The method and an apparatus for providing a service based on AI, a device, and a storage medium in the embodiments of the disclosure are described in detail with reference to the accompanying drawings below.

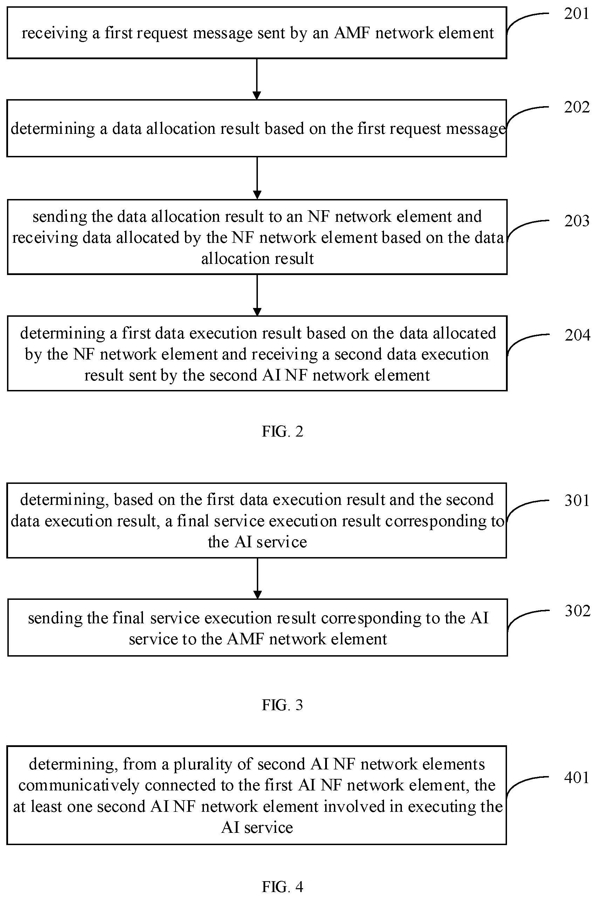

FIG. 2 is a flowchart of a method for providing a service based on AI according to the embodiments of the disclosure. The method is executed by a first AI NF network element with the decision-making capability. As shown in FIG. 2, the method for providing a service based on AI may include the following steps 201 to 204.

At step 201, a first request message sent by an AMF network element is received.

In an embodiment of the disclosure, the first request message indicates that there is an AI service requested by a terminal.

The first request message may include at least one of: an AI service type corresponding to the AI service requested by the terminal, in which the AI service type may be a video, a language, etc.; or an AI service identifier (ID) corresponding to the AI service requested by the terminal, in which the AI service ID is configured to uniquely indicate the AI service.

In an embodiment of the disclosure, the first request message may be sent to the first AI NF network element after the AMF network element receives the second request message sent (such as transparent transmission) by the terminal via the base station. The first request message may be a CreateAI0Context_Request message, and the second request message may be an AI service establishment request message.

It needs to be noted that in an embodiment of the disclosure, the first request message may further include at least one of: a data network name (DNN); user information of the terminal; an access type; or an ID of the terminal; in which the ID may be a paging early indication (PEI), a generic public subscription identifier (GPSI), or the like.

At step 202, a data allocation result is determined based on the first request message.

In an embodiment of the disclosure, the data allocation result includes: indication information corresponding to data allocated to the first AI NF network element and at least one second AI NF network element involved in executing the AI service, from data needed to complete the AI service. That is, the data allocation result specifically includes: a corresponding allocation relationship between indication information of the data needed to complete the AI service and the first AI NF network element and the at least one second AI NF network element involved in executing the AI service. The data allocation result implicitly indicates that, data indicated by indication information corresponding to the first AI NF network element is allocated to the first AI NF network element, and the data indicated by indication information corresponding to the second AI NF network element is allocated to the second AI network NF network element. The second AI NF network element is specifically a network element with the capability of executing to provide an AI function but without the decision-making capability, in which the indication information may be a data name and/or a data ID.

Further, in an embodiment of the disclosure, the steps of "determining the data allocation result based on the first request message" may specifically include: determining by the first AI NF network element, the data needed to complete the AI service based on the first request message, grouping by the first AI NF network element, the data needed to complete the AI service and allocating at least one data group to the first AI NF network element and at least one data group to the at least one second AI NF network element involved in executing the AI service, respectively. Thus, the first AI NF network element and the at least one second AI NF network element involved in executing the AI service are capable of executing corresponding tasks to realize the AI service based on the allocated data groups. However, it needs to be emphasized that when the data needed to complete the AI service is determined, the first AI NF network element does not determine specific data, but determines the indication information corresponding to the data needed to complete the AI service, so that the determined data is indicated by the indication information. In addition, when the data needed to complete the AI service is grouped, the first AI NF network element does not group the specific data, but implicitly groups the data by grouping the indication information corresponding to the data, in which the indicated data corresponding to each indication information group is mainly used to complete a portion of the tasks of the AI service. Further, when the at least one data group is allocated to the first AI NF network element and the at least one data group is allocated to the at least one second AI NF network element involved in executing the AI service, the first AI NF network element does not allocate specific data groups to the first AI NF network element and the at least one second AI NF network element involved in executing the AI service, but determines a corresponding allocation relationship between the indication information group and the first AI NF network element and the at least one second AI NF network element involved in executing the AI service, so as to implicitly indicate which data is allocated to the first AI NF network element and which data is allocated to the at least one second AI NF network element involved in executing the AI service.

For example, in an embodiment of the disclosure, it is assumed that the above indication information is the data name, and the second AI NF network elements involved in executing the AI service include a second AI NF network element #1 and a second AI NF network element #2. Based on the above, when the first AI NF network element receives the first request message, it may be determined that the AI service is currently needed to be performed, and the first AI NF network element determines data names of the data needed to complete the AI service based on the first request message. The data names include: data name 1, data name 2, data name 3, data name 4 ...... data name 10. In this case, the data names may be grouped to obtain at least one set of data name groups. For example, the data names 1-3 are divided into data name group 1, the data names 4-7 are divided into data name group 2, and the data names 8-10 are divided into data name group 3. Afterwards, the data allocation result may be determined as: allocating the data name group 1 to the first AI NF network element, allocating the data name group 2 to the second AI NF network element #1, and allocating the data name group 3 to the second AI NF network element #2. In this case, the data allocation result implicitly indicates: allocating the data with the data names 1-3 in the data name group 1 to the first AI NF network element, allocating the data with the data names 4-7 in the data name group 2 to the second AI NF network element #1, and allocating the data with the data names 8-10 in the data name group 3 to the second AI NF network element #2.

At step 203, the data allocation result is sent to an NF network element and data allocated by the NF network element based on the data allocation result is received.

In an embodiment of the disclosure, the NF network element may be a user data repository (UDR) network element and/or an unstructured data storage network function (UDSF) network element. The UDR network element and the UDSF network element store a structured data collection and an unstructured data collection respectively. The source of the data stored in the UDR network element and the UDSF network element is mainly: data provided when the terminal is registered, or data corresponding to the AI service, which is requested by the terminal and synchronously provided by the terminal to the NF network element when the terminal requests the AI service.

In an embodiment of the disclosure, the first AI NF network element sends the data allocation result to the NF network element, so that the NF network element is capable of allocating, based on the data allocation result, corresponding data to the first AI NF network element and corresponding data to the at least one second AI NF network element involved in executing the AI service. Thus, the first AI NF network element and the at least one second AI network element involved in executing the AI service are capable of executing corresponding tasks to complete the AI service based on the data allocated by the NF network element.

At step 204, a first data execution result is determined based on the data allocated by the NF network element and a second data execution result sent by the second AI NF network element is received.

In an embodiment of the disclosure, the first data execution result may be obtained by training of the first AI NF network element based on the data allocated by the NF network element. The second data execution result is obtained by training of the second AI NF network element based on the data allocated to the second AI NF network element by the NF network element.

It may be seen from steps 202 to 204 that, in the disclosure, when determining that the AI service needs to be executed, the first AI NF network element may group the data needed to complete the AI service, and indicate the NF network element to allocate different data groups to the first AI NF network element and the at least one second AI network element involved in executing the AI service, respectively. Thus, the first AI NF network element and the at least one second AI network element involved in executing the AI service are capable of executing respective tasks corresponding to the data to complete the AI service based on the data allocated by the NF network element. Accordingly, in the disclosure, the first AI NF network element and the at least one second AI NF network element involved in executing the AI service are caused to separately execute different portions of the tasks of the AI service, classified management of the AI service and fine-grained division of AI functions may be thus realized, and a result of the AI service provided subsequently may be more accurate.

It needs to be noted that, following an embodiment of the disclosure, the data execution result is determined by the first AI NF network element and the at least one second AI NF network element involved in the executing of the AI service in parallel, which is more efficient.

Further, in an embodiment of the disclosure, after obtaining the first data execution result and the second data execution result, the first AI NF network element may provide the AI service to the terminal via the AMF network element based on the first data execution result and the second data execution result.

In summary, in the method for providing a service based on AI according to embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general and finely choreographed AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In the disclosure, by executing the AI service via the first AI NF network element and the second AI network element collaboratively, the overall effectiveness and speed of the AI service is improved. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 3 is a flowchart of a method for providing a service based on AI according to the embodiments of the disclosure. The method is executed by a first AI NF network element with the decision-making capability. As shown in FIG. 3, the method for providing a service based on AI may include the following steps 301 to 302.

At step 301, a final service execution result corresponding to the AI service is determined based on the first data execution result and the second data execution result.

In an embodiment of the disclosure, the final service execution result corresponding to the AI service satisfying an overall requirement may be obtained by performing an aggregation processing and a structuring processing on the first data execution result and the second data execution result by the first AI NF network element.

At step 302: the final service execution result corresponding to the AI service is sent to the AMF network element.

In summary, in the method for providing a service based on AI according to embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general and finely choreographed AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In the disclosure, by executing the AI service via the first AI NF network element and the second AI network element collaboratively, the overall effectiveness and speed of the AI service is improved. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 4 is a flowchart of a method for providing a service based on AI according to the embodiments of the disclosure. The method is executed by a first AI NF network element with the decision-making capability. As shown in FIG. 4, the method for providing a service based on AI may include the following step 401.

At step 401, at least one second AI NF network element involved in executing the AI service is determined from a plurality of second AI NF network elements communicatively connected to the first AI NF network element.

In an embodiment of the disclosure, the method for determining the at least one second AI NF network element involved in executing the AI service may specifically include the following steps a to f.

At step a, an AI service type corresponding to the AI service is determined.

In particular, the AI service type corresponding to the AI service may be determined based on the content included in the first request message.

At step b, an AI algorithm needed to complete the AI service is determined.

The first AI NF network element may determine the AI service specifically requested by the first request message based on the AI service ID and the AI service type in the first request message received, and determine the AI algorithm needed to complete the AI service by analyzing the AI service.

At step c, a data type of data needed to complete the AI service is determined.

The data type may include an independent and identically distributed (HD) type or a non-IID type.

At step d, a status request message is sent to the second AI NF network elements communicatively connected to the first AI NF network element, in which the status request message is configured to request status information of the second AI NF network elements related to a capability of executing the AI service.

The status information may include energy status information (or power status information) and/or communication status information.

At step e, the status information sent by the second AI NF network elements is received.

At step f, the at least one second AI NF network element involved in executing the AI service is selected based on at least one of the AI service type, the AI algorithm, the data type, or the status information.

In particular, in an embodiment of the disclosure, a second AI NF network element with an energy status and/or a communication status matching the AI service type, the AI algorithm, and the data type may be selected to be involved in executing the AI service. In another embodiment of the disclosure, the first few second AI NF network elements with better energy status and/or communication status may also be selected to be involved in executing the AI service, thus ensuring that the second AI NF network element may subsequently be capable of completing the AI service with high efficiency and high precision, and ensuring the efficiency and precision of the method for providing the AI service.

The number of second AI NF network elements selected to be involved in executing the AI service may be determined independently by the first AI NF network element based on the execution of the first AI NF network element, or may be determined based on a specific AI service to be executed. For example, the number of second AI NF network elements selected to be involved in executing the AI service is determined for the purpose of "executing the AI service with high efficiency and high precision".

In summary, in the method for providing a service based on AI according to embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general and finely choreographed AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In the disclosure, by executing the AI service via the first AI NF network element and the second AI network element collaboratively, the overall effectiveness and speed of the AI service is improved. In addition, in the disclosure, a first AI NF network element, a plurality of second AI NF network elements, and other network elements in the core network may form a unified technical framework for providing AI services, so as to avoid the problem of fragmentation of AI application scenarios.

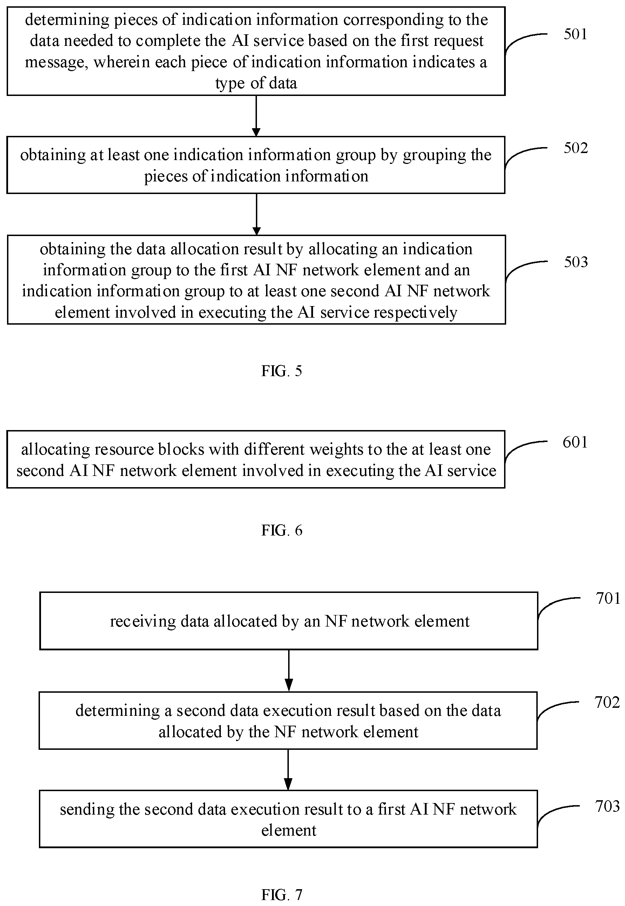

FIG. 5 is a flowchart of a method for providing a service based on AI according to the embodiments of the disclosure. The method is executed by a first AI NF network element with the decision-making capability. As shown in FIG. 5, the method for providing a service based on AI may include the following steps 501 to 503.

At step 501, pieces of indication information corresponding to the data needed to complete the AI service are determined based on the first request message, in which each piece of indication information indicates a type of data.

In an embodiment of the disclosure, the indication information may specifically be: a data name and/or a data ID.

In an embodiment of the disclosure, the first AI NF network element may specifically determine the pieces of indication information corresponding to the data needed to complete the AI service based on the contents included in the first request message.

At step 502, at least one indication information group is obtained by grouping the pieces of indication information.

In an embodiment of the disclosure, the pieces of indication information of data may be grouped based on an importance degree of the data for the AI service and/or a processing difficulty of the data. For example, the indication information corresponding to the data having a closer importance degree and/or a closer processing difficulty for the AI service may be divided into a group.

For example, it is assumed that the pieces of indication information corresponding to the data needed to complete the AI service and determined by the first AI NF network element are: indication information #1 corresponding to data 1, indication information #2 corresponding to data 2, indication information #3 corresponding to data 3, and indication information #4 corresponding to data 4. If the data 1 and the data 2 have a higher importance for the AI service, and the data 3 and the data 4 have a lower importance for the AI service, the indication information #1 and the indication information #2 may be divided into a group, and the indication information #3 and the indication information #4 may be divided into a group. Alternatively, if the data 2 and the data 3 are more heterogeneous for the AI service and the data 1 and the data 4 are less heterogeneous for the AI service, indicating that the data 2 and the data 3 have a higher processing difficulty and the data 1 and the data 4 have a lower processing difficulty, then the indication information #2 and indication information #3 may be divided into a group, and the indication information #1 and indication information #4 may be divided into a group.

At step 503, the data allocation result is obtained by allocating an indication information group to the first AI NF network element and an indication information group to the at least one second AI NF network element involved in executing the AI service respectively.

The indication information group allocated to the first AI NF network element indicates that, a data group indicated by the indication information group corresponding to the first AI NF network element is allocated to the first AI NF network element. The indication information group allocated to the at least one second AI NF network element involved in executing the AI service indicates that, a data group indicated by the indication information group corresponding to the at least one second AI NF network element involved in executing the AI service is allocated to the at least one second AI NF network element involved in executing the AI service.

In an embodiment of the disclosure, the method for allocating the indication information group to the first AI NF network element and the indication information group to the at least one second AI NF network element involved in executing the AI service respectively may include: allocating a specific indication information group to the first AI NF network element and allocating other indication information groups to the at least one second AI NF network element involved in executing the AI service respectively. In an embodiment of the disclosure, data corresponding to the specific indication information group has a maximum importance degree for the AI service, and/or the data corresponding to the specific indication information group has a maximum processing difficulty. Alternatively, in another embodiment of the disclosure, the specific indication information groups are the first few indication information groups in which the corresponding data has a higher importance for the AI service, and/or the specific indication information groups are the first few indication information groups in which the corresponding data has a higher processing difficulty.

In an embodiment of the disclosure, since the first AI NF network element has a higher processing capability, by allocating the data having a higher importance degree and/or a higher processing difficulty in the data needed to complete the AI service to the first AI NF network element, the first AI NF network element with a higher processing capability may be capable of completing the portion of the AI service that has a higher importance degree and/or a higher processing difficulty, thus ensuring the efficiency and precision of completing the AI service.

In summary, in the method for providing a service based on AI according to embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general and finely choreographed AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In the disclosure, by executing the AI service via the first AI NF network element and the second AI network element collaboratively, the overall effectiveness and speed of the AI service is improved. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 6 is a flowchart of a method for providing a service based on AI according to the embodiments of the disclosure. The method is executed by a first AI NF network element with the decision-making capability. As shown in FIG. 6, the method for providing a service based on AI may include the following step 601.

At step 601, resource blocks with different weights are allocated to the at least one second AI NF network element involved in executing the AI service.

In an embodiment of the disclosure, the weight of the resource block allocated to the second AI NF network element is positively correlated with the importance degree and the processing difficulty of the data corresponding to the indication information group allocated to the second AI NF network element for the AI service. For example, if the data corresponding to the indication information group allocated to the second AI NF network element has a higher importance for the AI service and/or, the data corresponding to the indication information group allocated to the second AI network element has a higher processing difficulty for the AI service, a resource block with a larger weight is allocated to the second AI NF network element.

It needs to be noted that the importance degree and/the processing difficulty of the data corresponding to the indication information group allocated to the second AI NF network element for the AI service specifically reflects a processing capability requirement for such second AI NF network element in completing the AI service. Based on this, by causing the weight of the resource block allocated to the second AI NF network element to be positively correlated with the importance degree and the processing difficulty of the data corresponding to the indication information group allocated to the second AI NF network element for the AI service, the resource block allocated to the second AI NF network element may match the processing capability requirement for the second AI NF network element in in completing the AI service. This avoids the technical problem of "wasting resources due to allocating more resource blocks to the second AI NF network elements, or low efficiency in completing the AI service due to allocating fewer resource blocks to the second AI NF network elements". Thus, the waste of resources is avoided and the efficiency of completing the AI service is ensured simultaneously.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 7 is a flowchart of a method for providing a service based on AI according to the embodiments of the disclosure. The method is executed by a second AI NF network element with the execution capability. As shown in FIG. 7, the method for providing a service based on AI may include the following steps 701 to 703.

At step 701, data allocated by an NF network element is received, in which the data is data needed to complete an AI service.

In an embodiment of the disclosure, the data received by the second AI NF network element may be allocated by the NF network element to the second AI network element based on a data allocation result.

At step 702, a second data execution result is determined based on the data allocated by the NF network element.

At step 703, the second data execution result is sent to a first AI NF network element.

In an embodiment of the disclosure, the second AI NF network element determines the data training result in parallel with the first AI NF network element and the other second AI NF network elements.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

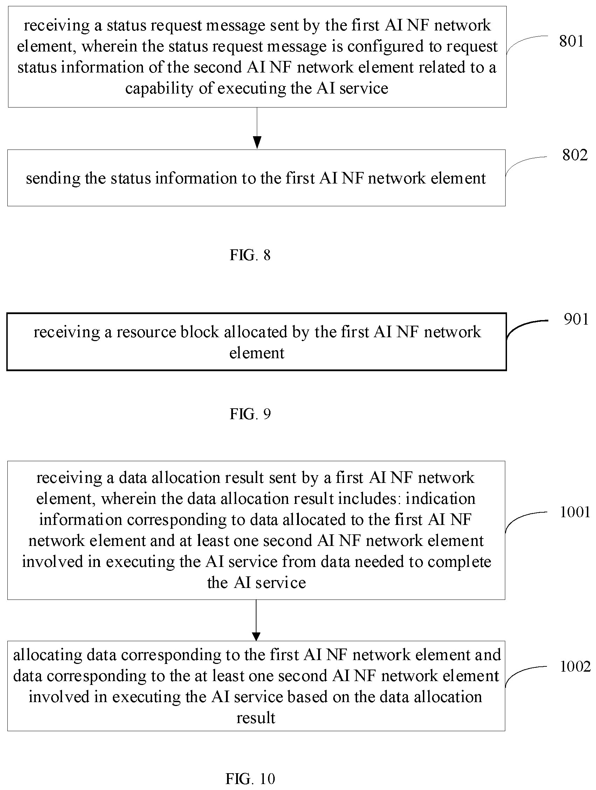

FIG. 8 is a flowchart of a method for providing a service based on AI according to the embodiments of the disclosure. The method is executed by a second AI NF network element with the execution capability. As shown in FIG. 8, the method for providing a service based on AI may include the following steps 801 to 802.

At step 801, a status request message sent by the first AI NF network element is received, in which the status request message is configured to request status information of the second AI NF network element related to a capability of executing the AI service.

At step 802, the status information is sent to the first AI NF network element.

The detailed description of steps 801 to 802 may be referred to the description of the above embodiments.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 9 is a flowchart of a method for providing a service based on AI according to the embodiments of the disclosure. The method is executed by a second AI NF network element with the execution capability. As shown in FIG. 9, the method for providing a service based on AI may include the following step 901.

At step 901, a resource block allocated by the first AI NF network element is received.

The detailed description of step 901 may be referred to the description of the above embodiments.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 10 is a flowchart of a method for providing a service based on AI according to the embodiments of the disclosure. The method is executed by an NF network element. As shown in FIG. 10, the method for providing a service based on AI may include the following steps 1001 to 1002.

At step 1001, a data allocation result sent by a first AI NF network element is received, in which the data allocation result includes: indication information corresponding to data allocated to the first AI NF network element and at least one second AI NF network element involved in executing the AI service from data needed to complete the AI service.

The detailed description of step 1001 may be referred to the description of the above embodiments.

At step 1002, data corresponding to the first AI NF network element and data corresponding to the at least one second AI NF network element involved in executing the AI service are allocated based on the data allocation result.

In particular, in an embodiment of the disclosure, the NF network element may find the data indicated by each piece of indication information in the data allocation result, allocate and send the data indicated by the indication information corresponding to the first AI NF network element to the first AI NF network element, allocate and send the data indicated by the indication information corresponding to the second AI NF network element to the second AI NF network element.

It needs to be noted that in an embodiment of the disclosure, the data allocation result may further include user information of the terminal and/or an ID of the terminal. Specifically, the NF network element may find the data corresponding to the terminal stored in the NF network element based on the user information of the terminal and/or the ID of the terminal, and then find the data indicated by each piece of indication information in the data allocation result from that data corresponding to the terminal, so as to allocate the data corresponding to the first AI NF network element and the data corresponding to the second AI NF network element involved in executing the AI service.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

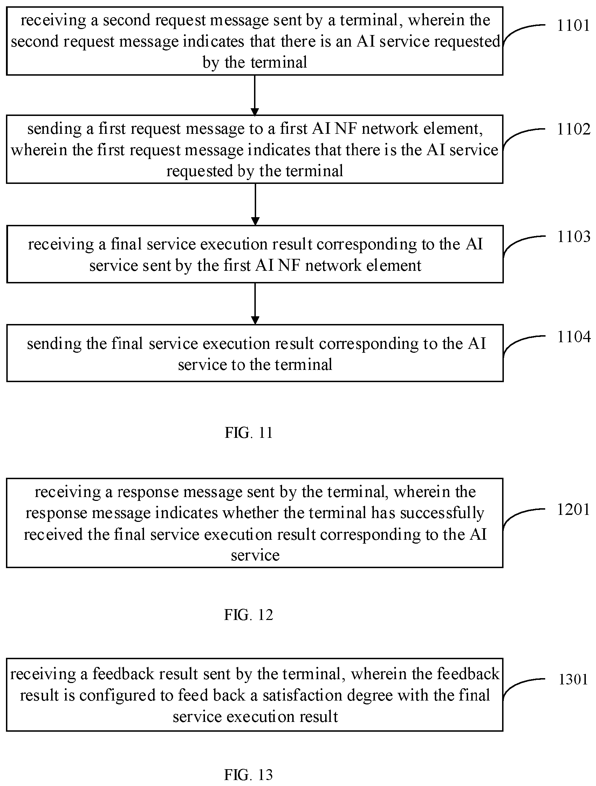

FIG. 11 is a flowchart of a method for providing a service based on AI according to the embodiments of the disclosure. The method is executed by an AMF network element. As shown in FIG. 11, the method for providing a service based on AI may include the following steps 1101 to 1103.

At step 1101, a second request message sent by a terminal is received, in which the second request message indicates that there is an AI service requested by the terminal.

At step 1102, a first request message is sent to a first AI NF network element, in which the first request message indicates that there is the AI service requested by the terminal.

At step 1103, a final service execution result corresponding to the AI service sent by the first AI NF network element is received.

At step 1104, the final service execution result corresponding to the AI service is sent to the terminal.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 12 is a flowchart of a method for providing a service based on AI according to the embodiments of the disclosure. The method is executed by an AMF network element. As shown in FIG. 12, the method for providing a service based on AI may include the following step 1201.

At step 1201, a response message sent by the terminal is received, in which the response message indicates whether the terminal has successfully received the final service execution result corresponding to the AI service.

In an embodiment of the disclosure, if the response message indicates that the terminal does not successfully receive the final service execution result, the AMF network element re-sends the final service execution result corresponding to the AI service to the terminal. Thus, a situation where the transmission of the final service execution result corresponding to the AI service fails may be prevented, and the successful providing of the AI service may be ensured.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 13 is a flowchart of a method for providing a service based on AI according to the embodiments of the disclosure. The method is executed by an AMF network element. As shown in FIG. 13, the method for providing a service based on AI may include the following step 1301.

At step 1301, a feedback result sent by the terminal is received, in which the feedback result is configured to feed back a satisfaction degree with the final service execution result.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

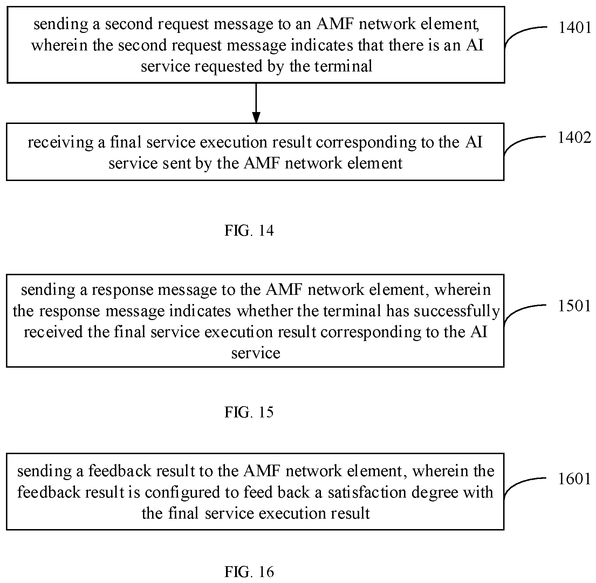

FIG. 14 is a flowchart of a method for providing a service based on AI according to the embodiments of the disclosure. The method is executed by a terminal. As shown in FIG. 14, the method for providing a service based on AI may include the following steps 1401 to 1402.

At step 1401, a second request message is sent to an AMF network element, in which the second request message indicates that there is an AI service requested by the terminal.

At step 1402, a final service execution result corresponding to the AI service sent by the AMF network element is received.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 15 is a flowchart of a method for providing a service based on AI according to the embodiments of the disclosure. The method is executed by a terminal. As shown in FIG. 15, the method for providing a service based on AI may include the following step 1501.

At step 1501, a response message is sent to the AMF network element, in which the response message indicates whether the terminal has successfully received the final service execution result corresponding to the AI service.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

FIG. 16 is a flowchart of a method for providing a service based on AI according to the embodiments of the disclosure. The method is executed by a terminal. As shown in FIG. 16, the method for providing a service based on AI may include the following step 1601.

At step 1601, a feedback result is sent to the AMF network element, in which the feedback result is configured to feed back a satisfaction degree with the final service execution result.

In an embodiment of the disclosure, the feedback result may be determined based on a score from the user.

In summary, in the method for providing a service based on AI provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

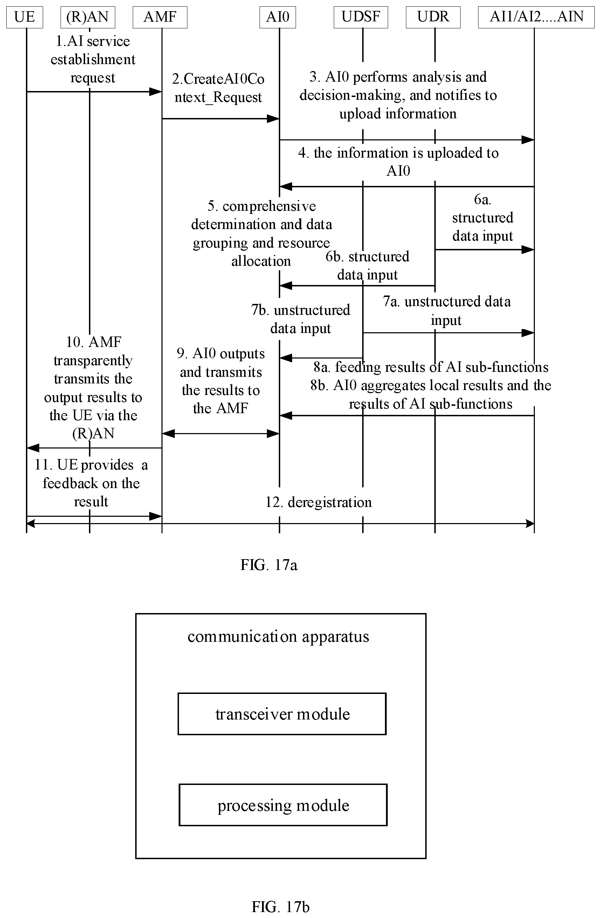

Further, FIG. 17a is a schematic diagram of an interaction process of a method for providing a service based on AI according to an embodiment of the disclosure. As shown in FIG. 17a, the method includes the following steps.
1) The UE (i.e., the above terminal) sends an AI service establishment request message (i.e., the above second request message) to the AMF via a (radio) access network ((R) AN).

The AI service establishment request message includes: a DNN, an AI service type (video, language, etc.), an AI service ID, and etc.

2) The AMF sends a CreateAI0Context_Request message to AIO (i.e., the manager of the AI service, the above first AI NF network element) to request for providing the AI service.

The CreateAI0Context_Request message includes: a DNN, an AI service type (video, language, etc.), an AI Service ID, user information, an access type, a PEI, a GPSI, and other information.

3) AIO performs analysis and decision-making based on the received information, analyzes an AI type to which the task belongs, an AI algorithm needed to be used, and a data type (HD/non-IID) needed to be used, and notifies each AI sub-function to upload status information (including an energy status, communication conditions, etc.).

4) The AI sub-function uploads information to AI0.

5) AIO determines and selects an AI sub-function group involved in the AI service comprehensively based on the information. The training data is divided into several groups based on reference factors such as importance and heterogeneity. Data with higher importance and heterogeneity are processed locally by AI0. The rest of the data is sent to the selected AI sub-functions, and resource blocks with different weights are allocated to the selected AI sub-functions in order to achieve a desired joint training effect. Further, AIO may send the data allocation result to a UDR network element and/or a UDSF network element (this step is not shown in FIG. 17a).

6&7) The NF UDR and the NF UDSF provide structured and unstructured data sets to the AIO and the AI sub-functions. The data is allocated based on the grouping set by the AI0. The source of the data is the data that stored in the two NFs (i.e., UDR and UDSF) when the UE registers and initiates a service request.

8) AIO and the AI sub-functions performs training synchronously and in parallel, which includes: 8(a): feeding an output result (i.e., the above second data execution result) to AI0; and 8(b): performing by AI0, an aggregating processing and a structuring processing on a local training result (i.e., the above first data execution result) and the received results to satisfy an overall requirement.

9) AIO transmits the result (i.e., the above final service execution result corresponding to the AI service) to the AMF for output.

10) The AMF transparently transmits the output result (i.e., the above final service execution result corresponding to the AI service) to the UE via the (R) AN.

11) The UE responds that the result is received (i.e., as described above, the terminal sends a response message to the AMF network element) and provides a feedback on the result (satisfactory or unsatisfactory) (i.e., as described above, the terminal sends a feedback result to the AMF network element).

12) The overall process of AI function service is completed and the deregistration is performed.

FIG. 17b is a block diagram of a communication apparatus according to an embodiment of the disclosure. As shown in FIG. 17b, the apparatus may include a transceiver module and a processing module.

The transceiver module is configured to receive a first request message sent by an AMF network element, in which the first request message indicates that there is an AI service requested by a terminal.

The processing module is configured to determine a data allocation result based on the first request message, in which the data allocation result includes: indication information corresponding to data allocated to the first AI NF network element and at least one second AI NF network element involved in executing the AI service from data needed to complete the AI service.

The transceiver module is further configured to send the data allocation result to an NF network element and receive data allocated by the NF network element based on the data allocation result.

The processing module is further configured to determine a first data execution result based on the data allocated by the NF network element and receive a second data execution result sent by the second AI NF network element.

In summary, in the communication apparatus provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, in an embodiment of the disclosure, the apparatus is further configured to: determine, based on the first data execution result and the second data execution result, a final service execution result corresponding to the AI service; and send the final service execution result corresponding to the AI service to the AMF network element.

Optionally, in an embodiment of the disclosure, the first request message includes at least one of: an AI service type corresponding to the AI service requested by the terminal; or an AI service ID corresponding to the AI service requested by the terminal.

Optionally, in an embodiment of the disclosure, the apparatus is further configured to: determine, from a plurality of second AI NF network elements communicatively connected to the first AI NF network element, the at least one second AI NF network element involved in executing the AI service.

Optionally, in an embodiment of the disclosure, the apparatus is further configured to: determine an AI service type corresponding to the AI service; determine an AI algorithm needed to complete the AI service; determine a data type of data needed to complete the AI service; send a status request message to the second AI NF network elements communicatively connected to the first AI NF network element, in which the status request message is configured to request status information of the second AI NF network elements related to a capability of executing the AI service; receive the status information sent by the second AI NF network elements; and select, based on at least one of the AI service type, the AI algorithm, the data type, or the status information, the at least one second AI NF network element involved in executing the AI service.

Optionally, in an embodiment of the disclosure, the status information includes at least one of: energy status information; or communication status information.

Optionally, in an embodiment of the disclosure, the indication information includes at least one of: a data name; or a data ID.

Optionally, in an embodiment of the disclosure, the processing module is further configured to: determine pieces of indication information corresponding to the data needed to complete the AI service based on the first request message, in which each piece of indication information indicates a type of data; obtain at least one indication information group by grouping the pieces of indication information; and obtain the data allocation result by allocating an indication information group to the first AI NF network element and an indication information group to the at least one second AI NF network element involved in executing the AI service respectively, in which the indication information group allocated to the first AI NF network element or the indication information group allocated to the at least one second AI NF network element involved in executing the AI service indicates: allocating a data group indicated by the indication information group corresponding to the first AI NF network element or the indication information group corresponding to the at least one second AI NF network element involved in executing the AI service, to the first AI NF network element or the at least one second AI NF network element involved in executing the AI service.

Optionally, in an embodiment of the disclosure, the processing module is further configured to: group the pieces of indication information of data based on an importance degree of the data for the AI service and/or a processing difficulty of the data.

Optionally, in an embodiment of the disclosure, the processing module is further configured to: allocate a specific indication information group to the first AI NF network element and allocate other indication information groups to the at least one second AI NF network element involved in executing the AI service respectively, in which data corresponding to the specific indication information group has a maximum importance degree for the AI service, and/or the data corresponding to the specific indication information group has a maximum processing difficulty.

Optionally, in an embodiment of the disclosure, the apparatus is further configured to: allocate resource blocks with different weights to the at least one second AI NF network element involved in executing the AI service, in which the weight of the resource block allocated to the second AI NF network element is positively correlated with the importance degree and the processing difficulty of the data corresponding to the indication information group allocated to the second AI NF network element for the AI service.

Optionally, in an embodiment of the disclosure, the NF network element includes at least one of: a UDR network element; or a UDSF network element.

Optionally, in an embodiment of the disclosure, the apparatus is further configured to: obtain the final service execution result corresponding to the AI service by performing an aggregation processing and a structuring processing on the first data execution result and the second data execution result.

Optionally, in an embodiment of the disclosure, the data execution result is determined by the first AI NF network element in parallel with the at least one second AI NF network element involved in executing the AI service.

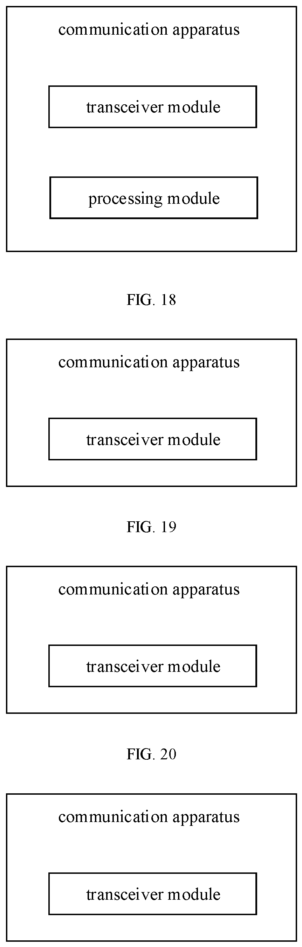

FIG. 18 is a block diagram of a communication apparatus according to an embodiment of the disclosure. As shown in FIG. 18, the apparatus may include a transceiver module and a processing module.

The transceiver module is configured to receive data allocated by an NF network element, in which the data is data needed to complete an AI service; and

The processing module is configured to determine a second data execution result based on the data allocated by the NF network element;

The transceiver module is further configured to send the second data execution result to a first AI NF network element.

In summary, in the communication apparatus provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, in an embodiment of the disclosure, the NF network element includes at least one of: a UDR network element; or a UDSF network element.

Optionally, in an embodiment of the disclosure, the apparatus is further configured to: receive a status request message sent by the first AI NF network element, in which the status request message is configured to request status information of the second AI NF network element related to a capability of executing the AI service; and send the status information to the first AI NF network element.

Optionally, in an embodiment of the disclosure, the status information includes at least one of: energy status information; or communication status information.

Optionally, in an embodiment of the disclosure, the apparatus is further configured to: receive a resource block allocated by the first AI NF network element.

Optionally, in an embodiment of the disclosure, the data execution result is determined by the second AI NF network element in parallel with other second AI NF network elements and the first AI NF network element.

FIG. 19 is a block diagram of a communication apparatus according to an embodiment of the disclosure. As shown in FIG. 19, the apparatus may include a transceiver module.

The transceiver module is configured to receive a data allocation result sent by a first AI NF network element, in which the data allocation result includes: indication information corresponding to data allocated to the first AI NF network element and at least one second AI NF network element involved in executing the AI service from data needed to complete the AI service,

The transceiver module is further configured to allocate data corresponding to the first AI NF network element and data corresponding to the at least one second AI NF network element involved in executing the AI service based on the data allocation result.

In summary, in the communication apparatus provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, in an embodiment of the disclosure, the indication information includes at least one of: a data name; or a data ID.

FIG. 20 is a block diagram of a communication apparatus according to an embodiment of the disclosure. As shown in FIG. 20, the apparatus may include a transceiver module.

The transceiver module is configured to receive a second request message sent by a terminal, in which the second request message indicates that there is an AI service requested by the terminal.

The transceiver module is further configured to send a first request message to a first AI NF network element, in which the first request message indicates that there is the AI service requested by the terminal.

The transceiver module is further configured to receive a final service execution result corresponding to the AI service sent by the first AI NF network element.

The transceiver module is further configured to send the final service execution result corresponding to the AI service to the terminal.

In summary, in the communication apparatus provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, in an embodiment of the disclosure, both the first request message and the second request message include at least one of: an AI service type corresponding to the AI service requested by the terminal; or an AI service ID corresponding to the AI service requested by the terminal.

Optionally, in an embodiment of the disclosure, the apparatus is further configured to: receive a response message sent by the terminal, in which the response message indicates whether the terminal has successfully received the final service execution result corresponding to the AI service.

Optionally, in an embodiment of the disclosure, the apparatus is further configured to: receive a feedback result sent by the terminal, in which the feedback result is configured to feed back a satisfaction degree with the final service execution result.

FIG. 21 is a block diagram of a communication apparatus according to an embodiment of the disclosure. As shown in FIG. 21, the apparatus may include a transceiver module.

The transceiver module is configured to send a second request message to an AMF network element, in which the second request message indicates that there is an AI service requested by the terminal;

The transceiver module is configured to receive a final service execution result corresponding to the AI service sent by the AMF network element.

In summary, in the communication apparatus provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Optionally, in an embodiment of the disclosure, the second request message includes at least one of: an AI service type corresponding to the AI service requested by the terminal; or an AI service ID corresponding to the AI service requested by the terminal.

Optionally, in an embodiment of the disclosure, the apparatus is further configured to: send a response message to the AMF network element, in which the response message indicates whether the terminal has successfully received the final service execution result corresponding to the AI service.

Optionally, in an embodiment of the disclosure, the apparatus is further configured to: send a feedback result to the AMF network element, in which the feedback result is configured to feed back a satisfaction degree with the final service execution result.

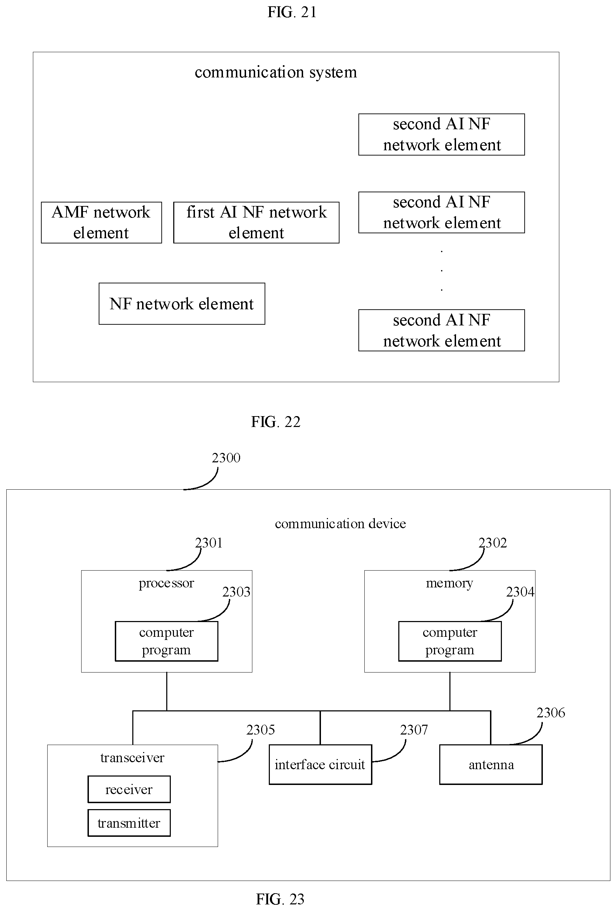

FIG. 22 is a block diagram of a communication system according to an embodiment of the disclosure. As shown in FIG. 22, the system may include a first network element, a second network element, a third network element and at least one fourth network element.

The first network element (i.e., the above AMF network element) is configured to receive a second request message sent by a terminal, in which the second request message indicates that there is an AI service requested by the terminal; and send a first request message, in which the first request message indicates that there is the AI service requested by the terminal.

The second network element (i.e., the above first AI NF network element) is configured to receive the first request message and determine a data allocation result based on the first request message, in which the data allocation result includes: indication information corresponding to data allocated to the first AI NF network element and at least one second AI NF network element involved in executing the AI service from data needed to complete the AI service, and send the data allocation result.

The third network element (i.e., the above NF network element) is configured to receive the data allocation result and allocate data based on the data allocation result.

The second network element is further configured to receive the data allocated by the third network element based on the data allocation result and determine a first data execution result.

The at least one fourth network element (i.e., the above second AI NF network element) is configured to receive the data allocated by the third network element based on the data allocation result, determine a second data execution result, and send the second data execution result.

The second network element is further configured to receive each second data execution result, determine, based on the first data execution result and the second data execution result, a final service execution result corresponding to the AI service, and send the final service execution result corresponding to the AI service.

The first network element is further configured to receive the final service execution result corresponding to the AI service, and send the final service execution result corresponding to the AI service to the terminal.

In summary, in the communication system provided in embodiments of the disclosure, the first AI NF network element with the decision-making capability may receive the first request message sent by the AMF network element, in which the first request message indicates that there is the AI service requested by the terminal. The first AI NF network element may determine the data allocation result based on the first request message, in which the data allocation result includes: the indication information corresponding to the data allocated to the first AI NF network element and the at least one second AI NF network element involved in executing the AI service from the data needed to complete the AI service. Afterwards, the first AI NF network element may send the data allocation result to the NF network element and receive the data allocated by the NF network element based on the data allocation result. Finally, the first AI NF network element may determine the first data execution result based on the data allocated by the NF network element and receive the second data execution result sent by the second AI NF network element. Accordingly, the method for providing a service based on AI provided by the disclosure is not a simple superposition on existing network processes, but a complete set of general AI service providing processes. Thus, the method based on the disclosure may accurately provide an AI service requested by a terminal to the terminal, which meets needs of personalized AI services. In addition, in the method of the disclosure, by grouping the data needed to complete the AI service requested by the terminal and allocating the different groups of data to the first NF network element and the at least one second AI NF network element involved in executing the AI service, classified management of the AI service and fine-grained division of AI functions may be realized, and a result of the AI service provided subsequently may be more accurate. Furthermore, in the method of the disclosure, the first AI NF network element and the second AI NF network element determine the data execution result in parallel, which may improve the execution efficiency. In addition, in the disclosure, a first AI NF network element, a plurality of second AI NF network elements, and other network elements in the core network may form a unified technical framework for providing AI services, so as to avoid the problem of fragmentation of AI application scenarios.

Please refer to FIG. 23, which is a block diagram of a communication device 2300 according to the embodiments of the disclosure. The communication device 2300 may be a network device, a terminal, or a chip, a chip system, a processor, etc. supporting the network device to implement the above methods, or a chip, a system on a chip, a chip system, a processor, etc. supporting the terminal to implement the above methods. The device may be used to implement the methods in the above method embodiments, which are described in the above method embodiments.

The communication device 2300 may include one or more processors 2301. The processor 2301 may be a general purpose processor or a special purpose processor. For example, it may be a baseband processor or a central processing unit. The baseband processor may be used to process communication protocols and communication data, and the central processing unit may be used to control communication devices (such as a base station, a baseband chip, a terminal, a terminal chip, a DU or a CU, etc.), to execute computer programs, and process computer program data.

Optionally, the communication device 2300 may also include one or more memories 2302 for storing a computer program 2304 and the processor 2301 executes the computer program 2304 to cause the communication device 2300 to implement the methods in the above method embodiments. Optionally, the memory 2302 may also store data. The communication device 2300 and the memory 2302 may be set separately or integrated together.

Optionally, the communication device 2300 may also include a transceiver 2305 and an antenna 2306. The transceiver 2305 may be called a transceiver unit, a transceiver machine, or a transceiver circuit, etc. to perform the transceiving function. The transceiver 2305 may include a receiver and a transmitter, in which the receiver may be called a receiving machine or a receiving circuit, etc. to perform the receiving function; the transmitter may be called a transmitting machine or a transmitting circuit, etc. to perform the transmitting function.

Optionally, the communication device 2300 may also include one or more interface circuits 2307. The interface circuit 2307 is configured to receive code instructions and transmit the code instructions to the processor 2301. When the processor 2301 executes the code instructions, the communication device 2300 is caused to implement the methods in the above method embodiments.

In one implementation, the processor 2301 may include a transceiver for performing the receiving function and the transmitting function. For example, the transceiver may be a transceiver circuit, or an interface, or an interface circuit. The transceiver circuit, the interface, or the interface circuit used to perform the receiving function and the transmitting function may be separate or integrated. The transceiver circuit, the interface, or the interface circuit may be used to read and write code/data, or the transceiver circuit, the interface, or the interface circuit may be used to transmit signals.

In one implementation, the processor 2301 may store a computer program 2303. When the computer program 2303 is running on the processor 2301, the communication device 2300 is caused to implement the method in the above method embodiments. The computer program 2303 may be solidified in the processor 2301, in which case the processor 2301 may be implemented by hardware.

In one implementation, the communication device 2300 includes a circuit that may implement the transmitting or receiving or communicating function in the above method embodiments. The processor and transceiver in the present embodiment may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal (such as the terminal in the method embodiments), but the scope of the communication device in the present embodiment is not limited to this, and the structure of the communication device may not be restricted by FIG. 23. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

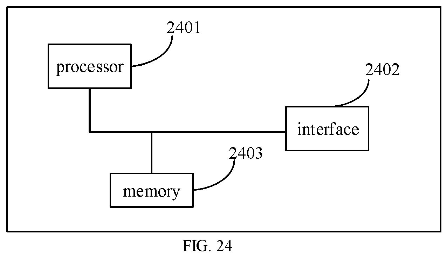

For the case where the communication device may be a chip or a chip system, please refer to the structural diagram of a chip in FIG. 24. The chip illustrated in FIG. 24 includes a processor 2401 and an interface 2402. There may be one or more processors 2401, and there may be a plurality of interfaces 2402.

Optionally, the chip also includes the memory 2403, which is used to store necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the disclosure.

The embodiments of the disclosure also provide a readable storage medium for storing instructions. When the instructions are executed by a computer, the function of any one of the above method embodiments is performed.

The embodiments of the disclosure also provide a computer program product. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the disclosure are only for the convenience of description, and are not used to limit the scope of the embodiments of the disclosure, and also indicate a sequential order.

The term "at least one" in the disclosure may also be described as one or more, and the more may be two, three, four, or more, which is not limited in the disclosure. In the embodiment of the disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the disclosure may be configured or pre-defined. Values of information in the tables are only examples, and may be configured as other values, which are not limited in the present embodiment. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Pre-defined in the present embodiment may be understood as defined, pre-defined, stored, pre-stored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the disclosure.

Those skilled in the art may clearly understand that, a specific working process of a system, an apparatus and a unit described above may refer to a corresponding process in the above method embodiments, which will not be repeated here.

The above are only implementations of the present embodiment. However, the protection scope of the present embodiment is not limited here. Changes and substitutions that may be easily considered by those skilled in the art shall be contained within the protection scope of the disclosure. Therefore, the protection scope of the present embodiment shall be subject to the protection scope of claims.

## Claims

1. A method for providing a service based on artificial intelligence (AI), executed by a first AI network function (NF) network element with decision-making capability, comprising:
receiving a first request message sent by an access and mobility management function (AMF) network element, wherein the first request message indicates that there is an AI service requested by a terminal;
determining a data allocation result based on the first request message, wherein the data allocation result comprises: indication information corresponding to data allocated to the first AI NF network element and at least one second AI NF network element involved in executing the AI service from data needed to complete the AI service;
sending the data allocation result to an NF network element and receiving data allocated by the NF network element based on the data allocation result; and
determining a first data execution result based on the data allocated by the NF network element and receiving a second data execution result sent by the second AI NF network element.

2. The method of claim 1, further comprising:
determining, based on the first data execution result and the second data execution result, a final service execution result corresponding to the AI service; and
sending the final service execution result corresponding to the AI service to the AMF network element.

3. The method of claim 1, wherein the first request message comprises at least one of:
an AI service type corresponding to the AI service requested by the terminal; or
an AI service identifier (ID) corresponding to the AI service requested by the terminal.

4. The method of claim 1, further comprising:
determining, from a plurality of second AI NF network elements communicatively connected to the first AI NF network element, the at least one second AI NF network element involved in executing the AI service.

5. The method of claim 4, wherein determining the at least one second AI NF network element involved in executing the AI service comprises:
determining an AI service type corresponding to the AI service;
determining an AI algorithm needed to complete the AI service;
determining a data type of data needed to complete the AI service;
sending a status request message to the second AI NF network elements communicatively connected to the first AI NF network element, wherein the status request message is configured to request status information of the second AI NF network elements related to a capability of executing the AI service;
receiving the status information sent by the second AI NF network elements; and
selecting, based on at least one of the AI service type, the AI algorithm, the data type, or the status information, the at least one second AI NF network element involved in executing the AI service.

6. The method of claim 5, wherein the status information comprises at least one of:
energy status information; or
communication status information.

7. The method of claim 1, wherein the indication information comprises at least one of:
a data name; or
a data ID.

8. The method of claim 1 or claim 5, wherein determining the data allocation result based on the first request message comprises:
determining pieces of indication information corresponding to the data needed to complete the AI service based on the first request message, wherein each piece of indication information indicates a type of data;
obtaining at least one indication information group by grouping the pieces of indication information; and
obtaining the data allocation result by allocating an indication information group to the first AI NF network element and an indication information group to the at least one second AI NF network element involved in executing the AI service respectively, wherein the indication information group allocated to the first AI NF network element or the indication information group allocated to the at least one second AI NF network element involved in executing the AI service indicates: allocating a data group indicated by the indication information group corresponding to the first AI NF network element or the indication information group corresponding to the at least one second AI NF network element involved in executing the AI service, to the first AI NF network element or the at least one second AI NF network element involved in executing the AI service.

9. The method of claim 8, wherein obtaining the at least one indication information group by grouping the pieces of indication information comprises:
grouping the pieces of indication information of data based on an importance degree of the data for the AI service and/or a processing difficulty of the data.

10. The method of claim 8, wherein allocating the indication information group to the first AI NF network element and the indication information group to the at least one second AI NF network element involved in executing the AI service respectively comprises:
allocating a specific indication information group to the first AI NF network element and allocating other indication information groups to the at least one second AI NF network element involved in executing the AI service respectively,
wherein data corresponding to the specific indication information group has a maximum importance degree for the AI service, and/or the data corresponding to the specific indication information group has a maximum processing difficulty.

11. The method of claim 9, further comprising:
allocating resource blocks with different weights to the at least one second AI NF network element involved in executing the AI service,
wherein the weight of the resource block allocated to the second AI NF network element is positively correlated with the importance degree and the processing difficulty of the data corresponding to the indication information group allocated to the second AI NF network element for the AI service.

12. The method of claim 1, wherein the NF network element comprises at least one of:
a user data repository (UDR) network element; or
an unstructured data storage network function (UDSF) network element.

13. The method of claim 2, wherein determining, based on the first data execution result and the second data execution result, the final service execution result corresponding to the AI service comprises:
obtaining the final service execution result corresponding to the AI service by performing an aggregation processing and a structuring processing on the first data execution result and the second data execution result.

14. The method of claim 1, wherein the data execution result is determined by the first AI NF network element in parallel with the at least one second AI NF network element involved in executing the AI service.

15. A method for providing a service based on artificial intelligence (AI), executed by a second AI network function (NF) network element with execution capability, comprising:
receiving data allocated by an NF network element, wherein the data is data needed to complete an AI service;
determining a second data execution result based on the data allocated by the NF network element; and
sending the second data execution result to a first AI NF network element.

16. The method of claim 15, wherein the NF network element comprises at least one of:
a user data repository (UDR) network element; or
an unstructured data storage network function (UDSF) network element.

17. The method of claim 15, further comprising:
receiving a status request message sent by the first AI NF network element, wherein the status request message is configured to request status information of the second AI NF network element related to a capability of executing the AI service; and
sending the status information to the first AI NF network element.

18. The method of claim 17, wherein the status information comprises at least one of:
energy status information; or
communication status information.

19. The method of claim 15, further comprising:
receiving a resource block allocated by the first AI NF network element.

20. The method of claim 15, wherein the data execution result is determined by the second AI NF network element in parallel with other second AI NF network elements and the first AI NF network element.

21. A method for providing a service based on artificial intelligence (AI), executed by a network function (NF) network element, comprising:
receiving a data allocation result sent by a first AI NF network element, wherein the data allocation result comprises: indication information corresponding to data allocated to the first AI NF network element and at least one second AI NF network element involved in executing the AI service from data needed to complete the AI service; and
allocating data corresponding to the first AI NF network element and data corresponding to the at least one second AI NF network element involved in executing the AI service based on the data allocation result.

22. The method of claim 21, wherein the indication information comprises at least one of:
a data name; or
a data ID.

23. A method for providing a service based on artificial intelligence (AI), executed by an access and mobility management function (AMF) network element, comprising:
receiving a second request message sent by a terminal, wherein the second request message indicates that there is an AI service requested by the terminal;
sending a first request message to a first AI network function (NF) network element, wherein the first request message indicates that there is the AI service requested by the terminal;
receiving a final service execution result corresponding to the AI service sent by the first AI NF network element; and
sending the final service execution result corresponding to the AI service to the terminal.

24. The method of claim 23, wherein both the first request message and the second request message comprise at least one of:
an AI service type corresponding to the AI service requested by the terminal; or
an AI service identifier (ID) corresponding to the AI service requested by the terminal.

25. The method of claim 23, further comprising:
receiving a response message sent by the terminal, wherein the response message indicates whether the terminal has successfully received the final service execution result corresponding to the AI service.

26. The method of claim 23, further comprising:
receiving a feedback result sent by the terminal, wherein the feedback result is configured to feed back a satisfaction degree with the final service execution result.

27. A method for providing a service based on artificial intelligence (AI), executed by a terminal, comprising:
sending a second request message to an access and mobility management function (AMF) network element, wherein the second request message indicates that there is an AI service requested by the terminal; and
receiving a final service execution result corresponding to the AI service sent by the AMF network element.

28. The method of claim 27, wherein the second request message comprises at least one of:
an AI service type corresponding to the AI service requested by the terminal; or
an AI service identifier (ID) corresponding to the AI service requested by the terminal.

29. The method of claim 28, further comprising:
sending a response message to the AMF network element, wherein the response message indicates whether the terminal has successfully received the final service execution result corresponding to the AI service.

30. The method of claim 27, further comprising:
sending a feedback result to the AMF network element, wherein the feedback result is configured to feed back a satisfaction degree with the final service execution result.

31. A communication apparatus, configured in a first artificial intelligence (AI) network function (NF) network element with decision-making capability, comprising:
a transceiver module, configured to receive a first request message sent by an access and mobility management function (AMF) network element, wherein the first request message indicates that there is an AI service requested by a terminal; and
a processing module, configured to determine a data allocation result based on the first request message, wherein the data allocation result comprises: indication information corresponding to data allocated to the first AI NF network element and at least one second AI NF network element involved in executing the AI service from data needed to complete the AI service;
wherein the transceiver module is further configured to send the data allocation result to an NF network element and receive data allocated by the NF network element based on the data allocation result; and
the processing module is further configured to determine a first data execution result based on the data allocated by the NF network element and receive a second data execution result sent by the second AI NF network element.

32. A communication apparatus, configured in a second artificial intelligence (AI) network function (NF) network element with execution capability, comprising:
a transceiver module, configured to receive data allocated by an NF network element, wherein the data is data needed to complete an AI service; and
a processing module, configured to determine a second data execution result based on the data allocated by the NF network element;
wherein the transceiver module is further configured to send the second data execution result to a first AI NF network element.

33. A communication apparatus, configured in a network function (NF) network element, comprising:
a transceiver module, configured to receive a data allocation result sent by a first artificial intelligence (AI) NF network element, wherein the data allocation result comprises: indication information corresponding to data allocated to the first AI NF network element and at least one second AI NF network element involved in executing the AI service from data needed to complete the AI service,
wherein the transceiver module is further configured to allocate data corresponding to the first AI NF network element and data corresponding to the at least one second AI NF network element involved in executing the AI service based on the data allocation result.

34. A communication apparatus, configured in an access and mobility management function (AMF) network element, comprising:
a transceiver module, configured to receive a second request message sent by a terminal, wherein the second request message indicates that there is an artificial intelligence (AI) service requested by the terminal,
wherein the transceiver module is further configured to send a first request message to a first AI network function (NF) network element, wherein the first request message indicates that there is the AI service requested by the terminal;
the transceiver module is further configured to receive a final service execution result corresponding to the AI service sent by the first AI NF network element; and
the transceiver module is further configured to send the final service execution result corresponding to the AI service to the terminal.

35. A communication apparatus, configured in a terminal, comprising:
a transceiver module, configured to send a second request message to an access and mobility management function (AMF) network element, wherein the second request message indicates that there is an artificial intelligence (AI) service requested by the terminal;
wherein the transceiver module is configured to receive a final service execution result corresponding to the AI service sent by the AMF network element.

36. A communication device, comprising a processor and a memory for storing a computer program, wherein when the computer program is executed by the processor, the device is caused to implement the method of any one of claims 1 to 14, or the method of any one of claims 15 to 20, or the method of any one of claims 21 to 22, or the method of any one of claims 23 to 26, or the method of any one of claims 27 to 30.

37. A communication device, comprising: a processor and an interface circuit,
wherein the interface circuit is configured to receive code instructions and transmit the code instructions to the processor; and
the processor is configured to run the code instructions to implement the method of any one of claims 1 to 14, or the method of any one of claims 15 to 20, or the method of any one of claims 21 to 22, or the method of any one of claims 23 to 26, or the method of any one of claims 27 to 30.

38. A communication system, comprising:
a first network element, configured to receive a second request message sent by a terminal, wherein the second request message indicates that there is an artificial intelligence (AI) service requested by the terminal; and send a first request message, wherein the first request message indicates that there is the AI service requested by the terminal;
a second network element, configured to receive the first request message and determine a data allocation result based on the first request message, wherein the data allocation result comprises: indication information corresponding to data allocated to the first AI NF network element and at least one second AI NF network element involved in executing the AI service from data needed to complete the AI service, and send the data allocation result;
a third network element, configured to receive the data allocation result and allocate data based on the data allocation result;
wherein the second network element is further configured to receive the data allocated by the third network element based on the data allocation result and determine a first data execution result;
at least one fourth network element, configured to receive the data allocated by the third network element based on the data allocation result, determine a second data execution result, and send the second data execution result;
wherein the second network element is further configured to receive each second data execution result, determine, based on the first data execution result and the second data execution result, a final service execution result corresponding to the AI service, and send the final service execution result corresponding to the AI service; and
the first network element is further configured to receive the final service execution result corresponding to the AI service, and send the final service execution result corresponding to the AI service to the terminal.

39. A computer readable storage medium for storing instructions, wherein when the instructions are executed, the method of any one of claims 1 to 14 is implemented, or the method of any one of claims 15 to 20 is implemented, or the method of any one of claims 21 to 22 is implemented, or the method of any one of claims 23 to 26 is implemented, or the method of any one of claims 27 to 30 is implemented.
